# EUROPEAN PATENT SPECIFICATION

(11) **EP 1 593 547 B1**
(45) Date of publication and mention of the grant of the patent: **02.09.2009**
(21) Application number: 04010765.8
(22) Date of filing: 06.05.2004
(51) Int. Cl.: B60N 2/70

(54) **Suspension mat with plastic links**
Sitzmatte mit Kunstoffelementen
Toile de suspension avec liaisons de plastic

(43) Date of publication of application: 09.11.2005
(73) Proprietor: FICO CABLES LDA, 4471 Maia (PT)
(72) Inventor: Pinto Ribeiro,Susana Carla Technological Centre Pujol & Tarragó, 08100 Mollet del Valles (ES)
(74) Representative: Hess, Peter K. G.

(56) References cited:
- DE-A- 10 129 721
- DE-U- 20 015 847
- GB-A- 1 367 139

## Description

### 1. Field of the invention

The invention relates to a suspension mat like it is used in the seat and the backrest of a motor vehicle seat and which acts for the suspension of the cushioning (see, for example, DE 200 15 847 U1, corresponding to the preamble of independent product claim 1 or independent method claim 17, respectively).

### 2. Prior art

Suspension mats of metal wires are known in the prior art which carry the cushioning of a seat or a backrest of a motor vehicle seat. Such suspension mats are usually hinged into a metal seat frame of the motor vehicle seat. Usually, the suspension mat consists of formed metal wires, which are connected to each other by appropriate means to provide a suspension respectively cushioning effect. The cushioning behavior of a motor vehicle seat is influenced by the suspension effect of the suspension mat to a great extent. Such suspension mats are on the one hand used in the backrests as well as in the seat of a motor vehicle seat.

A suspension mat for the backrest of a motor vehicle seat is known from the WO 98/07590. This suspension mat comprises vertical frame portions which are connected in a U shape at its lower portion, and horizontal suspension wires, which are connected to the vertical frame elements. The horizontal suspension wires comprise essentially a sinus shape, to provide a suspension effect. The suspension mat is hinged into a frame of the backrest by hooks. The horizontal suspension wires are connected to each other by a vertical central string at its mid portion, whereby the horizontal suspension wires are held together in vertical direction. Thereby, the suspension behavior of the disclosed suspension mat is constant over the complete surface of the backrest. It is therefore the problem of the present invention to provide a suspension mat for a backrest or the seat of a motor vehicle seat which comprises locally different suspension characteristics to adapt the suspension effect of the suspension mat to the anatomy of the occupants. Thereby, particularly the seating comfort should be enhanced.

It is a further problem of the invention to produce a particularly cost-effective suspension mat. Further, the suspension mat should also be more cost-effective during production compared to the prior art.

### 3. Summary of the invention

The above-mentioned problems are solved by a suspension mat according to the invention as defined in independent product claim 1 or independent method claim 17, respectively. Further features or method steps of the invention are disclosed in the dependent claims 2 to 16 and 18 attached thereto..

The plastic links transmit pulling forces between the suspension wires and themselves support the cushioning material of a motor vehicle seat which contacts them. By the pin-jointed connection of the suspension wires by means of the plastic links, the suspension mat yields locally defined by punctiform load wherein the seat comfort is effectively increased. Further, the plastic links can be provided tear-resistant but flexible, wherein also by the plastic links a locally definable cushioning behavior can be achieved.

A further aspect lies in the cost effective and easy production of a suspension mat according to the invention. The plastic links replace additional spring steel suspension wires or spring steel clamps between the suspension wires which were used until now. The suspension links can be produced easily by injection molding and consist of a cost-efficient raw material. Further, the use of plastic links leads to a light weight suspension mat, since lightweight materials are used.

Further, plastic links prevent that during use the suspension mat causes undesired squeak noises, since metal-to-metal contacts are avoided.

Preferably, the plastic links completely cover sections of the suspension wires. By the complete covering, the plastic links form so-called eyes around the suspension wires, which form a particularly tear-resistant connection.

In a preferred embodiment, the plastic links are injection molded around the suspension wires. The injection molding is a particularly cost-efficient and safe production and connection method for the plastic links. The injection molding is preferred compared to other methods, for example gluing of the ends of the plastic links around the suspension wires.

Preferably, all plastic links are commonly injection molded in a single operation. By means of an appropriate injection molding form, all plastic links can be commonly injection molded around the suspension wires.

In a further preferred embodiment, the plastic links connect three or four adjacent suspension wires with each other. The plastic links can be provided in such a length that also a plurality of adjacent suspension wires are connected if this is desired due to the suspension properties.

Preferably, the suspension wires are bent in an essentially wave shape parallely to the seat plane, to provide a suspension effect. The suspension wires can be bent in wave shape slopes such that they represent an elongatable flat spring band. The kind and exact shape of the curves or loops is determined according to the desired suspension or supporting properties.

In a further preferred embodiment, the plastic links comprise flat band shaped portions which allow a deflection perpendicularly to the seat plane. If the plastic link comprises flat band shaped portions between the eyes, it is almost not elongateable in longitudinal direction, but can easily be deflected in transversal direction.

Preferably, the plastic links furthermore comprise wave shaped portions, which provide a spring effect in parallel to the seat plane. If the plastic link comprises wave shaped portions between the eyes, it can be elongated in longitudinal direction and also easily be deflected in transversal direction. In that way, overall a soft support effect is achievable.

Additionally, the plastic links can comprise plate shaped portions which provide a local stiffening effect between two suspension wires. If the plastic link comprises plate shaped portions between the eyes, the elongation as well as the deflection thereof can be limited. Therefore, in this portion, a harder suspension effect is achieved which is essentially determined by the spring effect of the suspension wires. Further, the plate shaped portions of the plastic links increase the contact area of the overlying cushioning material.

In another preferred embodiment, the plastic links comprise L shaped portions which provide a local stiffening effect between two portions of one suspension wire. By means of the plastic links, also partitions of a single suspension wire can be stiffened or the contact area of the suspension wire can be increased.

According to the invention as defined in claim 1, the course of the single curves of the suspension wires and the length, kind and arrangement of the plastic links can be provided such that the spring effect of the suspension mat in single portions of the seat plane is different. By purposeful selection of differently formed suspension wires, which are connected to each other by differently long and differently formed plastic links, the suspension effect of the suspension mat can be locally determined. Partitions of a suspension mat having a soft cushioning or partitions having a harder cushioning can be provided according to the purpose of use or anatomy of the occupants.

Preferably, portions of the suspension mat below the ischium of the occupants comprise a softer cushioning, than adjacent portions. Particularly preferred, a comparably long, flexible plastic link is provided in the portion below the ischium of the occupants, respectively. Due to this measure, the ischia of the occupants can deeper sink into the seat cushioning, whereby pressure peaks below the ischia are avoided and the seat comfort is essentially improved.

In a further preferred embodiment, the suspension wires comprise hook-shaped ends, which, according to the invention as defined in method claim 17, are provided with a plastic coating wherein the plastic coating is integrally formed with the plastic links. The plastic coating of the hook-shaped ends prevents a metallic contact between the suspension wires and the mounting of the suspension wires at the seat frame. Thereby, undesired squeak noises are avoided.

The plastic links further comprise straps, at which additional elements can be mounted. Preferably, the straps are provided with holes, windows, or clips to receive connection means.

The suspension mat further comprises injection molded straps or over-molded hook-shaped ends of the suspension wires, which are independent from the plastic links.

A finished suspension mat is immediately achieved by the injection molding process without any further assembly steps. Thereby, the production costs are lowered compared to suspension mats which are conventionally produced.

Particularly preferred, all plastic links are simultaneously formed by a single injection molding of the plastic material.

### 4. Short description of the drawings

In the following, preferred embodiments of the accompanying drawings are shown. It shows:
- Fig. 1:: schematically the assembly of a seat frame for a motor vehicle seat wherein the suspension mat according to the invention is hinged into the lower seat frame;
- Fig. 2:: a first embodiment of a suspension mat according to the invention;
- Fig. 3:: a second embodiment of a suspension mat according to the invention;
- Fig. 4:: a first embodiment of a plastic link according to the invention in a top view;
- Fig. 5:: a sectional view of the plastic link from fig. 4;

- Fig. 6:: a second embodiment of a plastic link according to the invention, comprising an L shaped portion, straps and overcoated hooks;
- Fig. 7:: a third embodiment of a plastic link according to the invention, comprising a plate shaped element and overcoated hooks;
- Fig. 8:: a fourth embodiment of a plastic link according to the invention comprising a mounting hole;
- Fig. 9:: a fifth embodiment of a plastic link according to the invention comprising wave-shaped portions, a mounting clip and a mounting window;
- Fig. 10:: a sectional view of the plastic link according to fig. 9;
- Fig. 11:: an over-molded strap, which is independent from the plastic links; and
- Fig. 12:: an over-molded hook-shaped end of a support wire, which is independent from the plastic links.

### 5. Detailed description of the preferred embodiments

In the following with respect to the drawings, preferred embodiments of the present invention are described in detail. It is to be noted that the single features of the preferred embodiments of the plastic links 50, 60, 70, 80, 90, 100 according to the invention can be arbitrarily combined with each other.

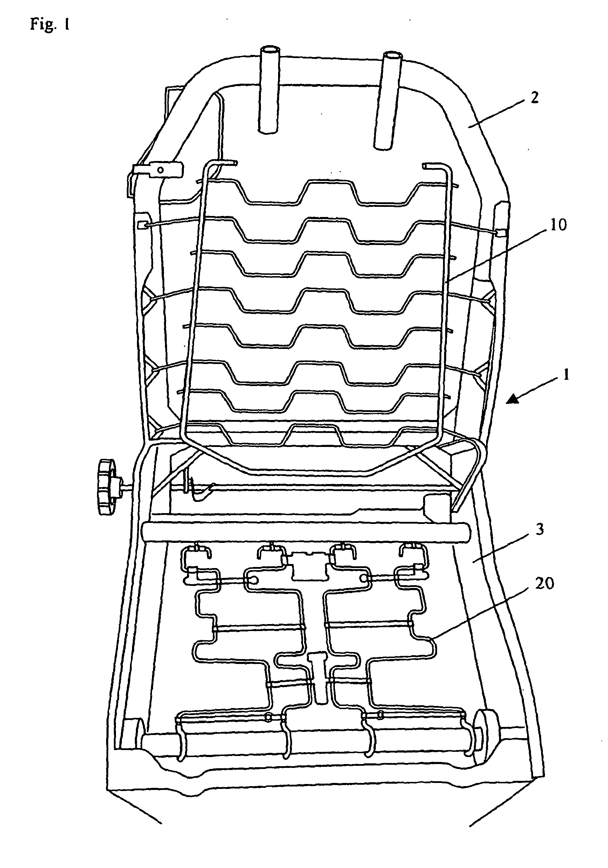

Fig. 1 shows a seat frame 1 of a motor vehicle seat. The seat frame 1 comprises essentially of a backrest frame 2, into which a suspension mat 10 of the backrest is hinged into and a seat frame 3 into that the suspension mat 20 is hinged. The suspension mat 20 is a suspension mat according to the invention and could be used for the backrest in a similar way instead of suspension mat 10.

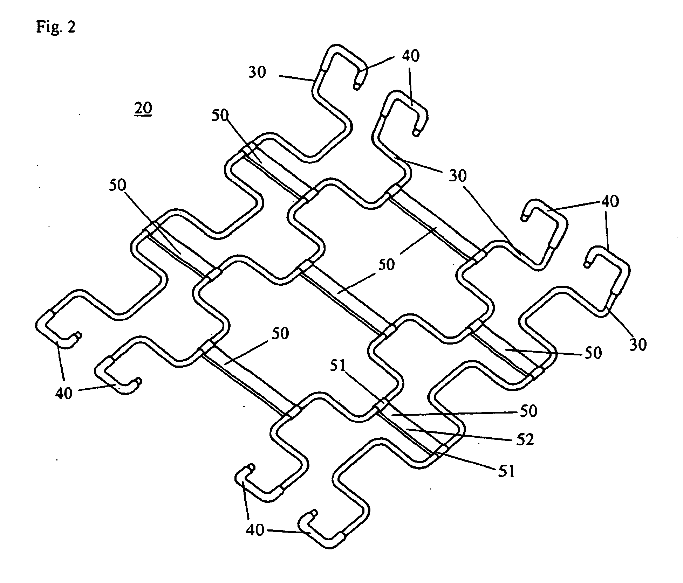

Fig. 2 shows a first embodiment of a suspension mat 20 according to the invention, comprising suspension wires 30 and plastic links 50 which pin-joint the suspension wires 30 with each other. In this embodiment, the suspension mat 20 comprises four suspension wires 30, which are provided with hooks 40 respectively, at their ends. Further, the suspension wires 30 are bent in an essentially wave shape in parallel to the seat plane such that they can provide a suspension effect. The wave-shaped curves of the suspension wires 30 are essentially rectangular in shape in the shown embodiment, wherein also other shapes like semicircular or sinus-shaped curves or irregular shapes can be used.

The suspension wires 30 essentially run in longitudinal direction of the vehicle as it is also shown in fig. 1. The suspension mat 20 further comprises hooks 40 lying with respect to the seat plane which are at least partially covered by plastic material for noise reduction.

The suspension wires 30 are pin-jointed by means of the plastic links 50. The plastic links 50 in this embodiment comprise of two eyes 51 which completely surround sections of the support wires 30 and an essentially flat portion 52, which connects the two eyes 51 with each other.

The plastic links 50 (and also the other plastic links 60, 70, 80, 90, 100) connect the suspension wires 30 (respectively 31, 32, 33, 34) pin-jointly with each other in that the eyes 51 may rotate onto the suspension wires 30 and/or the flat portions 52 are sufficiently flexible. The flexibility of the flat portions 52 can be secured by an appropriate material selection or sufficiently thin dimensioning of the portions 52. By means of these parameters, the desired suspension effect of the corresponding portion of the suspension mat can be determined.

Preferably all seven plastic links 50 are injection-molded around the suspension wires 30 in a common operation. In this operation, also the plastic coverings of the hook-shaped ends 40 of the suspension wires 30 can be produced. Thereby the assembly of the plastic links 50 to the suspension wires 30 is omitted.

The closed eyes 51 of the plastic links 50 further increase the strength of the connection and thereby the reliability of the overall suspension mat 20. Further, plastic material can be reduced since closed eyes can be made essentially smaller than for example hooks or clips for connection with the suspension wires 30.

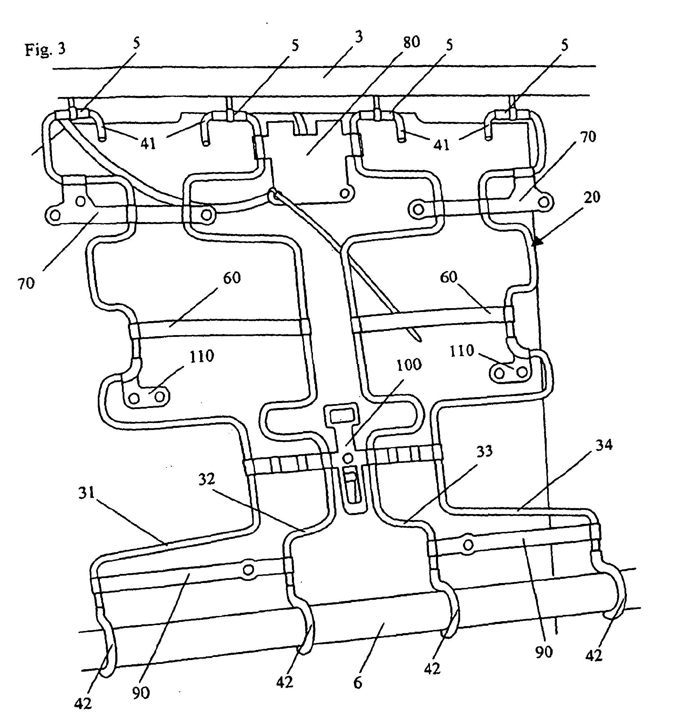

Fig. 3 shows a second preferred embodiment of an inventive suspension mat 20. In this embodiment, the suspension mat 20 comprises of four suspension wires 31, 32, 33, 34 which are hooked into the seat frame 3 in driving direction as well as different plastic links 60, 70, 80, 90, 100 which pin-joint the suspension wires 31, 32, 33, 34 with each other.

The suspension wires 31, 32, 33, 34 comprise of a spring steel wire having a circular section, and which are irregularly bent in parallel to the seat plane according to the cushioning requirements of suspension mat 20. The suspension wires 31, 32, 33, 34 further comprise plastic-covered horizontally lying hook-shaped ends 41, which are hooked into corresponding mountings 5 of seat frame 3 at one end thereof. At the other end thereof, the suspension wires 31, 32, 33, 34 comprise vertically arranged hook-shaped ends 42, which are also covered by plastic material and which surround a tubular crossbar 6 of the lower seat frame 3. The plastic cover of the hook shaped ends 41, 42 preferably acts for noise reduction, such that the seat does not generate squeak noises during use and further lowers the friction, so that a wear-off at the mounting points of suspension mat 20 is effectively prevented.

The suspension wires 30 of the embodiment from fig. 3 is shaped in such a way that particular portions of a seat cushioning, which overlies the suspension mat 20, are particularly suspended and other portions less. In that way, the suspension mat 20 provides an intentionally irregular suspension effect and cushioning effect of the motor vehicle seat to increase the seat comfort. In particular, the suspension effect is adjusted to the anatomy of the occupants.

During seating, the weight of the occupants is transmitted essentially via two extensions of the pelvis bone which extends to the bottom, namely the seat bones, also called ischia, to the seat plane. Therefore, in the area of the ischia, the highest load of the seat occurs. To distribute the punctiform and thereby high pressure load to larger areas of the bottom, the suspension mat 20 comprises in areas below the ischia a more soft cushioning than in adjacent portions. In fig. 3 the plastic links 60 lie below the ischia. Therefore, the ischia can increasingly impress into the seat cushioning, wherein the punctiform pressure load is distributed to other portions of the bottom and the seat comfort is noticeably improved. Furthermore, a more strong impression of the ischia in connection with the support effect of the backrest leads to an elongation of the spine, whereby hardenings of the muscles can be avoided during long car drives.

In the following, particular embodiments of the plastic links 60, 70, 80, 90, 100 are explained by reference to the figures 3 to 10:

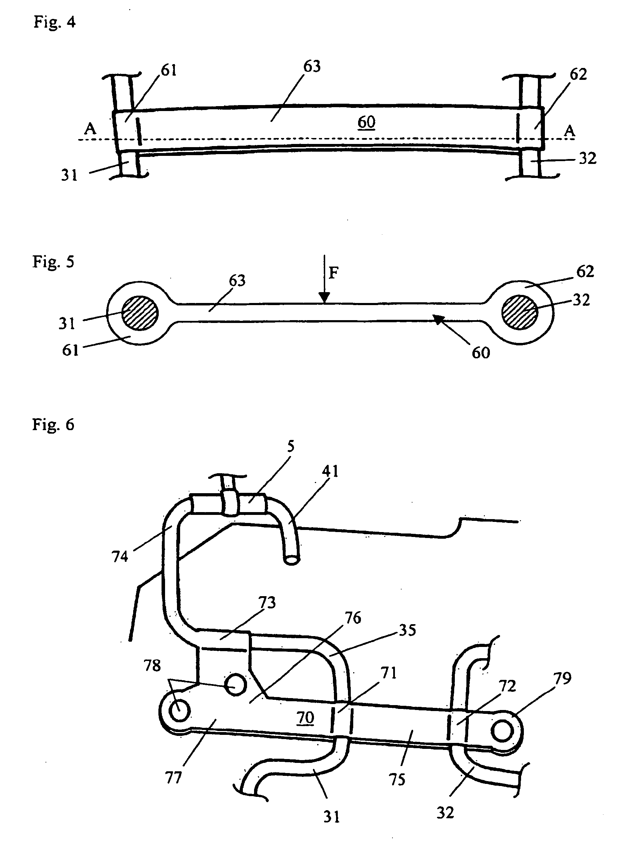

Fig. 4 shows a first embodiment of a plastic link 60, as it is also shown in fig. 2 with reference number 50. The plastic link 60 comprises of a first eye 61, which completely surrounds a section of the suspension wire 31 and a second eye 62 which completely surrounds a section of suspension wire 32. The eyes 61 and 62 are connected to each other by a flat bend-shaped portion 63.

Fig. 5 shows a sectional view of the plastic link 60 according line A-A of fig. 4. The plastic link 60 can be shaped in such a way that the eyes 61 and 62 are rotatably supported at corresponding sections of the suspension wires 31, 32. Instead of or additionally, the band-shaped portion 63 can be shaped thin and flexible, such that it can deflect to the bottom by means of a load (in fig. 5 indicated by force F). This principle is also valid for all other embodiments of the plastic links.

As shown in fig. 3, the plastic link 60 extends over a long portion between the suspension wires 31 and 32 respectively between the suspension wires 33 and 34. During a load onto this portion by the ischia of the occupants, the plastic link 60 deflects to the bottom, such that the ischia can sink into the cushioning more deep. The suspension wires 31, 32, 33, 34 are intentionally guided around this portion to not cause a punctiform pressure load in this area.

Fig. 6 shows a second preferred embodiment of a plastic link 70. The plastic link 70 connects the supporting wires 31 and 32 to each other and therefore comprises eyes 71 and 72, which completely surround sections of the supporting wires 31 and 32. The eyes 71 and 72 are connected to each other by a band-shaped portion 75. Additionally, the plastic link 70 comprises an L-shaped portion 76, which connects an additional eye 73 with eye 71 in an L-shaped manner. By this connection, the enclosed corner 35 of support wire 31 is strengthened and the contact area to the cushioning is increased by the L-shaped portion 76.

The L-shaped portion 76 further comprises a strap 77 as well as two holes 78, wherein one of which is located in strap 77. The plastic link 70 comprises a further strap 79 with a mounting hole in extension of the bend-shaped portion 75 via the eye 72.

The plastic link 70 merges into the plastic cover of the hook shaped end 41 of suspension wire 31 in extension of eye 73. The plastic cover 74 and the plastic link 70 are integrally formed and injection molded during a common operation.

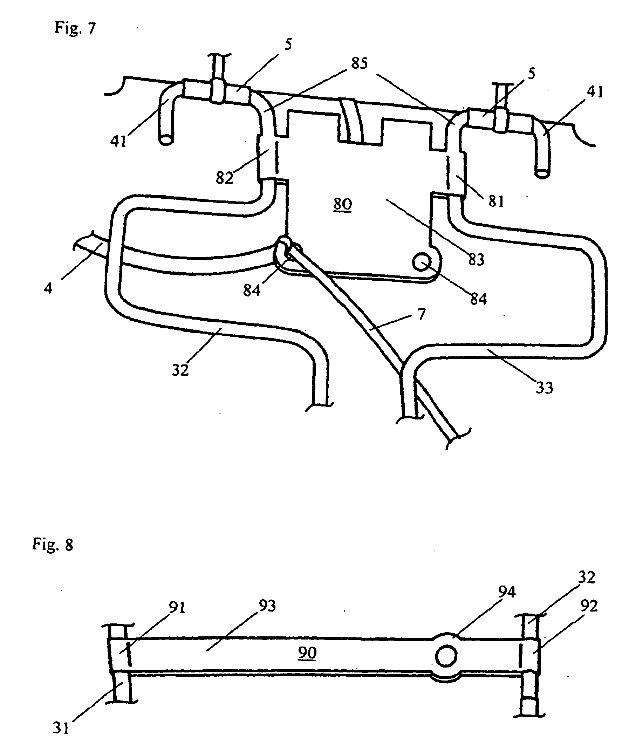

In fig. 7, a third embodiment of a plastic link 80 according to the invention is shown. The plastic link 80 comprises a plate-shaped portion 83, which provides a local stiffening effect between both suspension wires 32 and 33. The plate shaped portion 83 thereby transmits forces between both suspension wires 32 and 33 and increases locally the contact area of the suspension wires to the cushioning. Simultaneously, a harder cushioning is locally provided. In the plate shaped portion 83, further holes 84 are introduced, at which additional elements are mounted. In fig. 7 it is for example shown that a Bowden cable 4 is connected to the left hole 84 by means of a cable tie 7.

The plastic link 80 further comprises two eyes 81 and 82, which surround the suspension wires 32 and 33 as well as plastic covers 85, which at least partially cover the hook shaped ends 41 of suspension wires 32 and 33.

Fig. 8 shows a fourth embodiment of the plastic link 90 according to the invention, which comprises a first eye 91, which surrounds a partition of suspension wire 31, as well as a second eye 92, which surrounds a partition of suspension wire 32. The eyes 91 and 92 are connected by a band-shaped portion 93, which comprises a non-centric hole 94 for mounting of further elements.

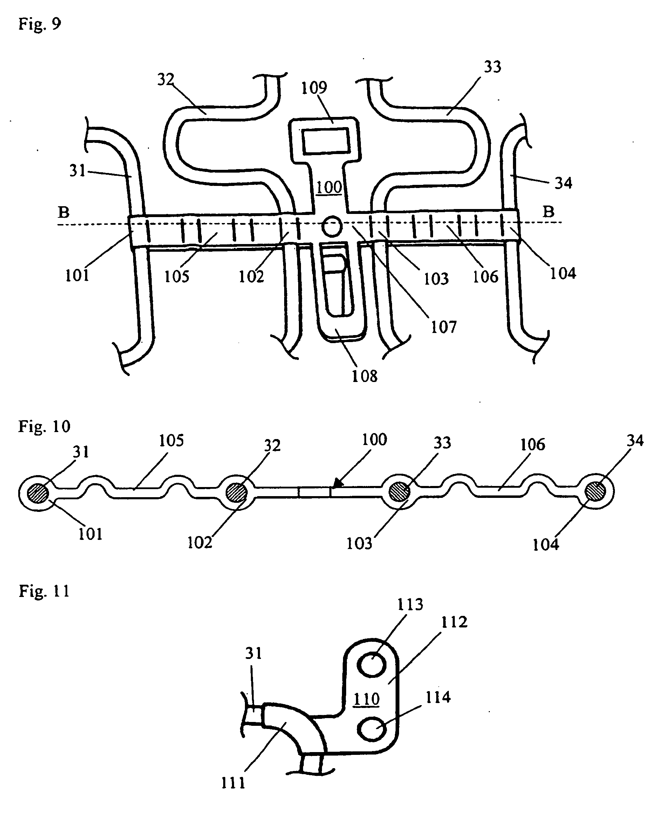

Fig. 9 shows a fifth embodiment of a plastic link 100 according to the invention, which connects the support wires 31, 32, 33, and 34 with each other. The plastic link 100 therefore comprises four eyes 101, 102, 103, 104 which completely surround partitions of suspension wires 31, 32, 33, 34. Between the eyes 101 and 102 and between the eyes 103 and 104, two wave-shaped and band-shaped portions 105 and 106 are arranged, which provide a spring effect in parallel to the seat plane, i.e. they may elongate in longitudinal direction. In this embodiment, it is possible that during load the distance between the eyes 101 and 102, as well as between the eyes 103 and 104 changes.

The section of plastic link 100 of fig. 9 along line B-B is shown in fig. 10. The kind and shape of the waved portions 105 and 106 as well as the thickness and material selection for these portions determine the spring effect of the plastic link 100.

Fig. 9 further shows that the plastic link 100 comprises a central portion 107, which is arranged between the eyes 102 and 103. The central portion 107 comprises a hole, at which further elements can be mounted. Further at the area 107 perpendicular to the longitudinal direction of the band-shaped portions 105 and 106 at two extending straps, a clip 108 as well as a window 109 is formed. At the window 109 and the clip 108, appropriate shaped additional elements can be mounted. The mounting of these elements is preferably done by inserting into the window 109 respectively clipping under the clip 108, wherein no additional connecting means are required.

Fig. 11 shows an injection molded strap 110, which is connected to the support wire 31 or 34 independently from the plastic links. The strap 110 further comprises a portion 111, which is injection molded around a curve of support wire 31, to connect the strap 110 fixedly with the suspension wire 31. Further, the strap 110 comprises an essentially L-shaped flat portion 112, which is provided with two holes 113 and 114 for mounting of additional elements. Preferably, the strap 110 is simultaneously injection molded with the plastic links 30 to 100.

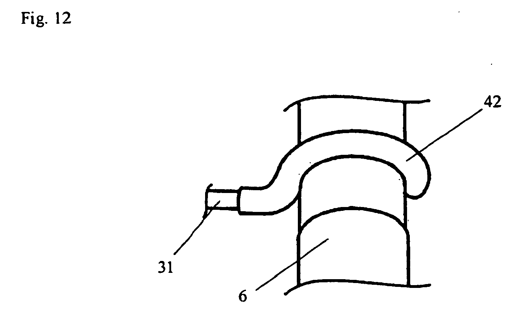

Fig. 12 shows a plastic overcoated hook-shaped end 42 of suspension wires 30, which is independent from the plastic links. The plastic overcoating of the hook-shaped end 42 is also simultaneously injection-molded together with the plastic links 30 to 100. The hook shaped end 42 engages a tubular shaped crossbar 6 from the top of the lower seat frame 3. By injection molding of the plastic cover around the hook shaped ends 41 and 42 of the suspension wires 31, 32, 33, 34, the operation of immersing the ends of the suspension wires into liquid plastic material is omitted. This leads to a further simplification of the production process. Further, the achievable wall thicknesses of the plastic coatings around their hook shaped ends 41 and 42 is essentially thicker than that of the bare immersing into liquid plastic material. Thereby, the plastic coating is not scraped off to the metal as it was the case while long use of immersed coated ends of the suspension wires 30, 31,32,33,34.

In the above-mentioned aspect of the present invention relating to a method for the production of a suspension mat, a plurality of suspension wires 30, 31, 32, 33, 34 is inserted into an injection-molded form. Subsequently plastic material is injected into the injection-molded form, whereby the suspension wires 30, 31, 32, 33, 34 are overcoated by plastic links 50, 60, 70, 80, 90, 100, which pin-joint the suspension wires 30, 31, 32, 33, 34 with each other.

Preferably all plastic links 50, 60, 70, 80, 90, 100 are produced by a single injection molding operation and are thereby simultaneously formed by means of a singular injection of the plastic material. This, on the one hand simplifies the production of the plastic links 50, 60, 70, 80, 90, 100 and, on the other hand a finished suspension mat 20 is formed without the need to mount the plastic links 50, 60, 70, 80, 90, 100 to the suspension wires 30, 31, 32, 33, 34.

In addition to the plastic links 50, 60, 70, 80, 90, 100, simultaneously during the injection molding operation also injection molded straps 110 or overcoated hook-shaped ends of the suspension wires 30, 31, 32, 33, 34 can be formed, which are independent of the plastic links 50, 60, 70, 80, 90, 100. Due to this method step, also additional elements of plastic material are formed at the suspension mat 20, simultaneously while injecting of the plastic material into the injection molding form. Thereby, the production process for a suspension mat 20 is further simplified.

### List of reference signs

- 1: seat frame
- 2: backrest frame
- 3: lower seat frame
- 4: Bowden cable
- 5: mounting clamp
- 6: crossbar
- 7: cable tie
- 10: suspension mat of backrest
- 20: suspension mat of seat
- 30: support wires
- 31: first support wire
- 32: second support wire
- 33: third support wire
- 34: fourth support wire
- 35: corner
- 40: hook-shaped end
- 41: horizontal hook-shaped ends
- 42: vertical hook-shaped ends
- 50: plastic links
- 51: eye
- 52: band-shaped portion
- 60: plastic link (first embodiment)
- 61: first eye
- 62: second eye
- 63: band-shaped portion
- 70: plastic link (second embodiment)
- 71: first eye
- 72: second eye
- 73: third eye
- 74: plastic cover
- 75: band-shaped portion
- 76: L-shaped portion
- 77: strap
- 78: holes
- 79: strap
- 80: plastic link (third embodiment)
- 81: first eye
- 82: second eye
- 83: plate-shaped portion
- 84: holes
- 85: plastic cover
- 90: plastic link (fourth embodiment)
- 91: first eye
- 92: second eye
- 93: band-shaped portion
- 94: hole
- 100: plastic link (fifth embodiment)
- 101: first eye
- 102: second eye
- 103: third eye
- 104: fourth eye
- 105: first wave-shaped, band-shaped portion
- 106: second wave-shaped, band-shaped portion
- 107: central portion
- 108: clip
- 109: window
- 110: strap
- 111: eye
- 112: L-shaped portion
- 113, 114: holes

## Claims

1. Suspension mat (20) for a motor vehicle seat, comprising:
a) a plurality of suspension wires (30, 31, 32, 33, 34); and
b) a plurality of plastic links (50, 60, 70, 80, 90, 100); wherein
c) the plastic links (50, 60, 70, 80, 90, 100) pin-joint the suspension wires (30, 31, 32, 33, 34) with each other, **characterized in that**
d) the run of single curves of the suspension wires (30, 31, 32, 33, 34) and the length, kind and arrangement of the plastic links (50, 60, 70, 80, 90, 100) are provided, such that the suspension effect of the suspension mat (20) is different in single portions of the seat plane.

2. Suspension mat according to claim 1, wherein the plastic links (50, 60, 70, 80, 90, 100) completely surround sections of the suspension wires (30, 31, 32, 33, 34).

3. Suspension mat according to one of the claims 1 or 2, wherein the plastic links (50, 60, 70, 80, 90, 100) are injection-molded around the suspension wires (30, 31, 32, 33, 34).

4. Suspension mat according to claim 3, wherein all plastic links (50, 60, 70, 80, 90, 100) are commonly injection molded in one operation.

5. Suspension mat according to one of the claims 1 to 4, wherein the plastic links (50, 60, 70, 80, 90, 100) connect three or four adjacent suspension wires (30, 31, 32, 33, 34) with each other.

6. Suspension mat according to one of the claims 1 to 5, wherein the suspension wires (30, 31, 32, 33, 34) are bent essentially in a wave shape in parallel to the seat plane, to provide a suspension effect.

7. Suspension mat according to one of the claims 1 to 6, wherein the plastic links (50, 60, 70, 90) comprise flat band-shaped portions (52, 63, 75, 93, 105, 106), that allow a deflection perpendicular to the seat plane.

8. Suspension mat according to one of the claims 1 to 7, wherein the plastic links (100) comprise wave-shaped portions (105, 106), which provide a suspension effect in parallel to the seat plane.

9. Suspension mat according to one of the claims 1 to 8, wherein the plastic links (80) comprise plate-shaped portions (83), that provide a local stiffening effect between two suspension wires (32 and 33).

10. Suspension mat according to one of the claims 1 to 6, wherein the plastic links (70) comprise L-shaped portions (76), which provide a local stiffening effect between two partitions of one suspension wire (31).

11. Suspension mat according to claim 1, wherein the portions of the suspension mat (20) below the ischia of the occupants comprise a softer cushioning compared to adjacent portions.

12. Suspension mat according to claim 11, wherein in the portion below the ischia of the occupants a comparable long, flexible plastic link (60) is respectively provided.

13. Suspension mat according to one of the claims 1 to 12, wherein the suspension wires (30, 31, 32, 33, 34) comprise hook-shaped ends (40, 41), which are provided with a plastic coating (85) wherein the plastic coating (85) is integrally provided with the plastic links (70, 80).

14. Suspension mat according to one of the claims 1 to 13, wherein the plastic links (70, 100) further comprise straps (77, 79, 108, 109) for mounting of additional elements.

15. Suspension mat according to claim 14, wherein the straps (77, 79, 108, 109) are provided with holes (78), windows (109) or clips (108) for receiving of connecting means.

16. Suspension mat according to one of the claims 1 to 15 further comprising injection-molded straps (110) and/or injection-molded hook-shaped ends (42) of the suspension wires (30, 31, 32, 33, 34) which are independent from the plastic links (50, 60, 70, 80, 90, 100).

17. Method for the production of a suspension mat (20), comprising the steps of:
a) inserting a plurality of suspension wires (30, 31, 32, 33, 34) into an injection-molding form; subsequently
b) injecting of plastic material into the injection molding form, wherein the suspension wires (30, 31, 32, 33, 34) are injection over-molded by plastic links (50, 60, 70, 80, 90, 100), which pin-joint the suspension wires (30, 31, 32, 33, 34), **characterized in that**
c) during injection of the plastic material also injection molded straps (110) are formed and/or hook-shaped ends (42) of the suspension wires (30, 31, 32, 33, 34) are covered with plastic, wherein the straps (110) and/or the hook-shaped ends (42) are independent from the plastic links (50, 60, 70, 80, 90, 100).

18. Method according to claim 17, wherein all plastic links (50, 60, 70, 80, 90, 100) are simultaneously formed by a singular injection of the plastic material.

## Patentansprüche

1. Stützmatte (20) für einen Kraftfahrzeugsitz, aufweisend:
a) eine Mehrzahl von Stützdrähten (30, 31, 32, 33, 34); und
b) eine Mehrzahl von Kunststoffverbindern (50, 60, 70, 80, 90, 100); wobei
c) die Kunststoffverbinder (50, 60, 70, 80, 90, 100) die Stützdrähte (30, 31, 32, 33, 34) miteinander gelenkig verbinden; **dadurch gekennzeichnet, dass**
d) der Verlauf der einzelnen Biegungen der Stützdrähte (30, 31, 32, 33, 34) und die Länge, Art und Anordnung der Kunststoffverbinder (50, 60, 70, 80, 90, 100) so bereitgestellt wird, dass die Federwirkung der Stützmatte (20) in einzelnen Bereichen der Sitzfläche unterschiedlich ist.

2. Stützmatte gemäß Anspruch 1, wobei die Kunststoffverbinder (50, 60, 70, 80, 90, 100) Abschnitte der Stützdrähte (30, 31, 32, 33, 34) vollständig umschließen.

3. Stützmatte gemäß einem der Ansprüche 1 oder 2, wobei die Kunststoffverbinder (50, 60, 70, 80, 90, 100) um die Stützdrähte (30, 31, 32, 33, 34) herum spritzgegossen sind.

4. Stützmatte gemäß Anspruch 3, wobei alle Kunststoffverbinder (50, 60, 70, 80, 90, 100) in einem Vorgang gemeinsam spritzgegossen sind.

5. Stützmatte gemäß einem der Ansprüche 1 bis 4, wobei die Kunststoffverbinder (50, 60, 70, 80, 90, 100) drei oder vier benachbarte Stützdrähte (30, 31, 32, 33, 34) miteinander verbinden.

6. Stützmatte gemäß einem der Ansprüche 1 bis 5, wobei die Stützdrähte (30, 31, 32, 33, 34) im Wesentlichen wellenförmig und parallel zur Sitzebene gebogen sind, um eine Federwirkung bereitzustellen.

7. Stützmatte gemäß einem der Ansprüche 1 bis 6, wobei die Kunststoffverbinder (50, 60, 70, 90) flache bandförmige Bereiche (52, 63, 93, 105, 106) aufweisen, die eine Durchbiegung senkrecht zur Sitzebene ermöglichen.

8. Stützmatte gemäß einem der Ansprüche 1 bis 7, wobei die Kunststoffverbinder (100) wellenförmige Bereiche (105, 106) aufweisen, die eine Federwirkung parallel zur Sitzebene bereitstellen.

9. Stützmatte gemäß einem der Ansprüche 1 bis 8, wobei die Kunststoffverbinder (80) plattenförmige Bereiche (83) aufweisen, die eine lokale Versteifungswirkung zwischen zwei Stützdrähten (32, 33) bereitstellen.

10. Stützmatte gemäß einem der Ansprüche 1 bis 6, wobei die Kunststoffverbinder (70) L-förmige Bereiche (76) aufweisen, die eine lokale Versteifungswirkung zwischen zwei Bereichen eines Stützdrahtes (31) bereitstellen.

11. Stützmatte gemäß Anspruch 1, wobei die Bereiche der Stützmatte (20) unterhalb der Sitzhöcker der Insassen eine weichere Dämpfung aufweisen, als benachbarte Bereiche.

12. Stützmatte gemäß Anspruch 11, wobei im Bereich unterhalb der Sitzhöcker der Insassen jeweils ein vergleichsweise langer, biegsamer Kunststoffverbinder (60) bereitgestellt wird.

13. Stützmatte gemäß einem der Ansprüche 1 bis 12, wobei die Stützdrähte (30, 31, 32, 33, 34) hakenförmige Enden (40, 41) aufweisen, die mit einer Kunststoffummantelung (85) versehen sind, wobei die Kunststoffummantelung (85) integral mit den Kunststoffverbindern (70, 80) ausgebildet ist.

14. Stützmatte gemäß einem der Ansprüche 1 bis 13, wobei die Kunststoffverbinder (70, 100) weiterhin Laschen (77, 79, 108, 109) zur Befestigung zusätzlicher Elemente aufweisen.

15. Stützmatte gemäß Anspruch 14, wobei die Laschen (77, 79, 108, 109) mit Löchern (78), Fenstern (109) oder Klipsen (108) versehen sind, um Verbindungsmittel aufzunehmen.

16. Stützmatte gemäß einem der Ansprüche 1 bis 15, weiterhin aufweisend angespritzte Laschen (110) und/oder umspritzte hakenförmige Enden (42) der Stützdrähte (30, 31, 32, 33, 34), die von den Kunststoffverbindern (50, 60, 70, 80, 90, 100) unabhängig sind.

17. Verfahren zum Herstellen einer Stützmatte (20), aufweisend die Schritte:
a) Einlegen einer Mehrzahl von Stützdrähten (30, 31, 32, 33, 34) in eine Spritzgussform; danach
b) Einspritzen von Kunststoff in die Spritzgussform, wobei die Stützdrähte (30, 31, 32, 33, 34) mit Kunststoffverbindern (50, 60, 70, 80, 90, 100) umspritzt werden, die die Stützdrähte (30, 31, 32, 33, 34) gelenkig miteinander verbinden; **dadurch gekennzeichnet, dass**
c) beim Einspritzen des Kunststoffs auch angespritzte Laschen (110) gebildet werden und/oder hakenförmige Enden (42) der Stützdrähte (30, 31, 32, 33, 34) mit Kunststoff umhüllt werden, wobei die Laschen (110) und die Umhüllungen der Enden (42) von den Kunststoffverbindern (50, 60, 70, 80, 90, 100) unabhängig sind.

18. Verfahren gemäß Anspruch 17, wobei alle Kunststoffverbinder (50, 60, 70, 80, 90, 100) gleichzeitig durch ein einmaliges Einspritzen des Kunststoffs gebildet werden.

## Revendications

1. Armature de soutien (20) pour un siège de véhicule automobile, comprenant :
a) une pluralité de fils de soutien (30, 31, 32, 33, 34) ; et
b) une pluralité de liaisons en plastique (50, 60, 70, 80, 90, 100) ; dans laquelle
c) les liaisons en plastique (50) relient de manière articulée les fils de soutien (30) les uns avec les autres, **caractérisée en ce que**
d) le parcours de courbes isolées des fils de soutien (30) et la longueur, le type et la configuration des liaisons en plastique (50) sont prévus de telle sorte que l'effet de soutien de l'armature de soutien (20) soit différent dans des parties isolées du plan du siège.

2. L'armature de soutien selon la revendication 1, dans laquelle les liaisons en plastique (50) entourent complètement des parties des fils de soutien (30).

3. L'armature de soutien selon l'une des revendications 1 ou 2, dans laquelle les liaisons en plastique (50) sont moulées par injection autour des fils de soutien (30).

4. L'armature de soutien selon la revendication 3, dans laquelle toutes les liaisons en plastique (50) sont moulées par injection en commun en une seule opération.

5. L'armature de soutien selon l'une des revendications 1 à 4, dans laquelle les liaisons en plastique (50) relient trois ou quatre fils de soutien adjacents (30) les uns avec les autres.

6. L'armature de soutien selon l'une des revendications 1 à 5, dans laquelle les fils de soutien (30) sont courbés essentiellement en une forme ondulée en parallèle au plan du siège, pour procurer un effet de soutien.

7. L'armature de soutien selon l'une des revendications 1 à 6, dans laquelle les liaisons en plastique (50, 60, 70, 90) comprennent des parties en forme de bandes plates (52, 63, 75, 93, 105, 106) qui autorisent une déflexion perpendiculairement au plan du siège.

8. L'armature de soutien selon l'une des revendications 1 à 7, dans laquelle les liaisons en plastique (100) comprennent des parties en forme ondulée (105, 106) qui procurent un effet de soutien parallèlement au plan du siège.

9. L'armature de soutien selon l'une des revendications 1 à 8, dans laquelle les liaisons en plastique (80) comprennent des parties de forme plate (83) qui procurent un effet de raidissement local entre deux fils de soutien (32 et 33).

10. L'armature de soutien selon l'une des revendications 1 à 6, dans laquelle les liaisons en plastique (70) comprennent des parties en forme de L (76) qui procurent un effet de raidissement local entre deux partitions d'un fil de soutien (31).

11. L'armature de soutien selon la revendication, 1, dans laquelle les parties de l'armature de soutien (20) situées au-dessous des ischions des occupants présentent un effet de coussin plus souple par rapport aux parties adjacentes.

12. L'armature de soutien selon la revendication 11, dans laquelle il est prévu dans la partie située au-dessous des ischions des occupants une liaison en plastique flexible longue comparable (60).

13. L'armature de soutien selon l'une des revendications 1 à 12, dans laquelle les fils de soutien (30, 31, 32, 33, 34) comprennent des extrémités en forme de crochets (40, 41) qui sont pourvues d'un revêtement en plastique (85), où le revêtement en plastique (85) est formé monobloc avec les liaisons en plastique (70, 80).

14. L'armature de soutien selon l'une des revendications 1 à 13, dans laquelle les liaisons en plastique (70, 100) comprennent en outre des sangles (77, 79, 108, 109) pour monter des éléments additionnels.

15. L'armature de soutien selon la revendication 14, dans laquelle les sangles (77, 79, 108, 109) sont pourvues de trous (78), de fenêtres (109) ou de pinces (108) pour recevoir des moyens de liaison.

16. L'armature de soutien selon l'une des revendications 1 à 15, comprenant en outre des sangles moulées par injection (110) et/ou des extrémités en forme de crochets moulées par injection (42) des fils de soutien (30, 31, 32, 33, 34) qui sont indépendantes des liaisons en plastique (50, 60, 70, 80, 90, 100).

17. Procédé de production d'une armature de soutien (20), comprenant les étapes suivantes :
a) insertion d'une pluralité de fils de soutien (30) dans une forme de moulage par injection ; puis ensuite
b) injection d'une matière plastique dans la forme de moulage par injection, de sorte que les fils de soutien (30) soient surmoulés par injection par des liaisons en plastique (50, 60, 70, 80, 90, 100) qui relient de manière articulée les fils de soutien (30), **caractérisé en ce que**
c) durant l'injection de la matière plastique on forme également par moulage par injection des sangles (110) et/ou on recouvre de matière plastique des extrémités en forme de crochets (42) des fils de soutien (30), les sangles (110) et/ou les extrémités en forme de crochets (42) étant indépendantes des liaisons en plastique (50).

18. Procédé selon la revendication 17, dans lequel toutes les liaisons en plastique (50) sont formées simultanément par une injection unique de la matière plastique.
